# EUROPÄISCHE PATENTSCHRIFT

(11) **EP 0 406 340 B1**
(45) Veröffentlichungstag und Bekanntmachung des Hinweises auf die Patenterteilung: **01.12.1993**
(21) Anmeldenummer: 89910069.7
(22) Anmeldetag: 20.09.1989
(51) Int. Cl.: H02J 7/16

(54) **BATTERIELADEEINRICHTUNG**
BATTERY-CHARGING DEVICE
CHARGEUR DE BATTERIE

(30) Priorität: 22.12.1988 DE 3843161
(43) Veröffentlichungstag der Anmeldung: 09.01.1991
(73) Patentinhaber: ROBERT BOSCH GMBH, 70442 Stuttgart (DE)
(72) Erfinder: MEYER, Friedhelm, D-7132 Illingen (DE); FREY, Wunibald, D-7141 Schwieberdingen (DE); DOEGE, Mathias, D-7015 Korntal-Münchingen (DE)
(86) Internationale Anmeldenummer: DE8900596
(87) Internationale Veröffentlichungsnummer: WO9007218

(56) Entgegenhaltungen:
- EP-A- 0 038 231
- EP-A- 0 055 149
- FR-A- 2 343 352

## Beschreibung

Die Erfindung geht aus von einer Batterieladeeinrichtung nach der Gattung des Hauptanspruchs. In Kraftfahrzeugen verwendet man Generatoren, die sich nach dem Anlauf des sie treibenden Motors selbst erregen. Dieses Selbsterregen soll so sicher sein, daß nach dem Anlauf des Motors der Generator das Bordnetz sofort mit Leistung versorgen kann. Die magnetische Restremanenz reicht normalerweise allein nicht aus, um die Selbsterregung sicherzustellen. Es wird daher versucht, durch verschiedenartige Schaltungen und unterschiedlich hohen Aufwand die Selbsterregung zu fördern. Eine der gebräuchlichen Möglichkeiten, die Selbsterregung zu fördern, ist, die Ladekontrollampe gleichzeitig zur Vorerregung des Generators zu verwenden. Dazu wird der Erregerwicklung über die Ladekontrollampe aus der Batterie im Startfall Energie zugeführt. Die Erregung des Generators ist in diesem Fall abhängig vom Ladezustand der Batterie, von der Batteriespannung, von der Häufigkeit der Starts oder Startversuche, insbesondere jedoch vom Leistungswert und der Funktionsfähigkeit der Ladekontrollampe, jedoch auch vom Anschlußwert der bereits dem Generator zugeschalteten Lasten und von der Umgebungstemperatur. Im ungünstigsten Fall erregt sich der Generator nicht und die Batterie wird nicht nachgeladen.

Zur Verbesserung der Selbsterregung ist daher nach der DE-OS 26 08 606 vorgesehen, der Erregerwicklung während des Startvorgangs durch eine zusätzliche Verbindung über einen Widerstand und eine Diode von der Batterie über den Starter Erregungsleistung zuzuführen. Diese Möglichkeit der Zuführung von zusätzlicher Erregungsleistung hat jedoch den Nachteil, daß sie unmittelbar nach dem Beenden des Startvorgangs beendet wird. Die Erregung des Generators wird daher, sofern sie nach dem Startvorgang noch nicht vollständig erreicht wurde, nicht auf die gewünschte Weise erfolgen um die benötigte Generatorausgangsspannung möglichst schnell und sicher zu erreichen.

Die erfindungsgemäße Batterieladeeinrichtung mit den kennzeichnenden Merkmalen des Hauptanspruchs hat gegenüber bekannten Anordnungen den Vorteil, daß sie auch unter ungünstigen Bedingungen eine sichere Erregung des Generators ermöglicht. Der Generator wird in jedem Fall nach dem Start erregt, unabhängig vom Zustand der Ladekontrollampe, weitgehend unabhängig von der Spannung der Batterie und, der im Generator verbliebenen Remanenz oder von der Zahl der Startversuche.

Da die zusätzliche Erregung über ein Relais mit einer Verzögerungsschaltung erfolgt, bricht die zusätzliche Erregung nicht gleich nach dem Ende des Startvorgangs ab.

Durch die in den Unteransprüchen aufgeführten Maßnahmen sind vorteilhafte Weiterbildungen und Verbesserungen der im Hauptanspruch angegebenen Batterieladeeinrichtung möglich. Vorteilhaft ist beispielsweise, in den Stromkreis der Hilfserregung einen ohmschen Widerstand zu schalten, man kann damit den Hilfserregerstrom während des Startvorgangs verringern bzw. definiert festlegen. Dadurch können beispielsweise Brandschäden an den Schleifringen vermieden werden. Weiterhin ist vorteilhaft, daß die Dauer des Hilfserregerstroms durch Verwendung eines frei wählbaren Zeitgliedes festgelegt werden kann.

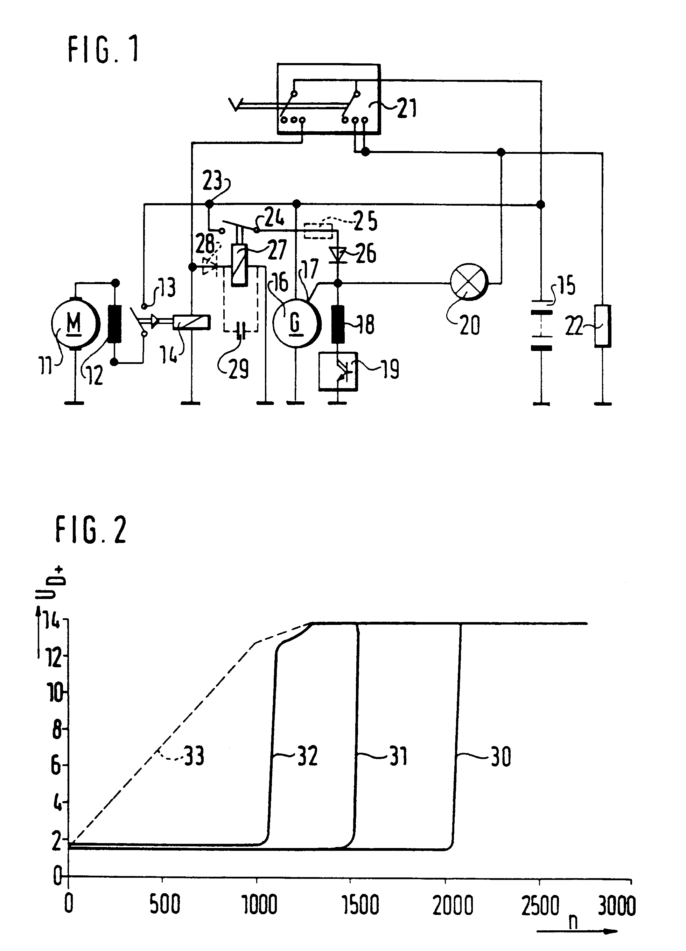

Ein Ausführungsbeipiel der Erfindung ist in der Figur 1 der Zeichnung dargestellt und wird in der nachfolgenden Beschreibung näher erläutert. Figur 2 zeigt das Angehverhalten eines Generators mit verschiedenen Vorerregerwiderständen.

Figur 1 zeigt den Startermotor 11 mit einer in Serie geschalteten Feldwicklung 12. In Serie mit dem Anker des Startermotors 11 und der Feldwicklung 12 liegt der Starterschalter 13. Der Starterschalter 13 kann mit Hilfe eines Starterrelais 14, das beispielsweise ein Einrückrelais sein kann, betätigt werden. Das freie Ende des Ankers des Startermotors 11 liegt an Masse, das freie Ende des Starterschalters 13 liegt gemäß dem Ausführungsbeipiel am Pluspol einer Batterie 15. Der Minuspol der Batterie 15 liegt an Masse. Zwischen dem Pluspol der Batterie und Masse ist die nicht dargestellte Gleichrichterbrücke eines Generators 16 geschaltet. Der Generator 16 des Ausführungsbeispiels soll ein Generator mit einer nachgeschalteten Hauptstromgleichrichterbrücke und mit nachgeschalteten Erregerdioden sein; deshalb ist für die Erregerdioden ein separater Ausgang 17 des Generators vorgesehen. Der Generator 16 weist eine getrennt gezeichnete Erregerwicklung 18 auf, die einerseits über einen Regler 19 mit Masse verbunden und andererseits über den Ausgang 17 mit dem Generator sowie über eine Ladekontrollampe 20 an einen Ausgang des Fahrschalters 21 angeschlossen ist. Der zugehörige Eingang des Fahrschalters 21 liegt am Pluspol der Batterie 15. Weiterhin ist die Ladekontrollampe 20 mit dem Bordnetz 22 verbunden. Dabei umfaßt das Bordnetz beispielweise eine Zündanordnung für den Motor, Lampen, Heizgeräte, Rundfunkgeräte und anderes mehr. Zwischen einen weiteren Ausgang des Fahrschalters 21 und Masse ist das Starterrelais 14 geschaltet.

Der Fahrschalter 21 enthält intern mehrere Kontakte, wobei in der Ausgangsstellung keiner der Kontakte geschlossen ist, während in der Betriebsstellung ein Betriebskontakt zum Einschalten von Verbrauchern im Kraftfahrzeug und in einer Anlaßstellung sowohl ein Anlaßkontakt zum Einschalten der Starteranordnung als auch der Betriebskontakt geschlossen sind.

An die Verbindungsleitung zwischen der Batterie 15 und dem Starterschalter 13 wird an einem Punkt 23 eine zusätzliche Leitung angeschlossen, mit einer Serienschaltung eines Schalters 24, und gegebenenfalls eines Widerstandes 25 und einer in Durchlaßrichtung gepolten Diode 26 die mit der Erregerwicklung 18, dem Generatorausgang 17 sowie der Ladekontrollampe 20 verbunden wird. Der Schalter 24 wird von einem von der Starteranordnung 11 - 14 angesteuerten Relais 27 betätigt. Gemaß dem Ausführungsbeispiel nach Figur 1 ist außerdem zwischen das Starterrelais 14 und das zusätzliche Relais 27 eine Diode 28, welche Rückwirkungen auf das Starterrelais 14 verhindert, geschaltet, wobei die Kathode der Diode 28 an das Relais 27 angeschlossen ist. Parallel zum Relais 27 ist ein Kondensator 29 geschaltet. Dabei bildet der Kondensator 29 zusammen mit der Relaisspule ein Zeitglied, das das Schalten des Relais 27 mit einer Zeitverzögerung ermöglicht.

Nach dem Betätigen des Fahrschalters 21 schließt das Starterrelais 14 den Starterschalter 13. Dadurch fließt ein Strom von der Batterie über den Schalter 13 und die Feldwicklung 12 des Startermotors. Über das vom Fahrschalter 21 bzw. von der Starteranordnung 11 - 14 angesteuerte Relais 27 wird der Schalter 24 geschlossen, wodurch ein zusätzlicher Erregerstrom von der Batterie 15 über den Schalter 24, den Widerstand 25 und die Diode 26 durch die Erregerwicklung 18 des Generators und den Spannungsregler 19 zur Masse fließt. Dieser Strom bewirkt während des Startvorgangs eine zusätzliche Vorerregung des Generators. Zur Verlängerung der Vorerregung über die Starterbetätigung hinausgehend kann das Relais 27 mit einer Zeitverzögerung ausgestattet sein, die bewirkt daß der Schalter 24 nicht sofort nach Beendigung des Startvorgangs wieder geöffnet wird, sondern erst nach einer gewissen Zeit wieder öffnet. Diese Zeitverzögerung ist durch Auswahl geeigneter Werte der Relaisspule 27 bzw. des Kondensators 29 einstellbar. Dabei soll die Diode 28 verhindern, daß der Kondensator 29 nach Bendigung des Startvorgangs über das Startrelais 14 wieder ent- laden wird.

Mit Hilfe des Widerstandes 25 kann der Maximalwert des von der Batterie gelieferten zusätzlichen Erregerstromes festgelegt werden. Die Diode 26 entkoppelt den Generatorausgang 17 von dem Pluspol der Batterie.

Da die Vorerregung nunmehr durch die zusätzliche Leitung über die Bauteile 24, 25 und 26 erfolgt, kann die Ladekontrollampe frei gewählt werden. Sie benötigt also keine spezielle Leistungsaufnahme, so daß beispielsweise eine hochohmige Ladekontrollampe oder statt der Ladekontrollampe auch eine lichtemittierende Diode verwendet werden kann. Auch wenn die Ladekontrollampe defekt ist, ist über die zusätzliche Leitung eine sichere Vorerregung des Generators gewährleistet.

Der Generator und der Starter sind als Ganzes jeweils von einem Gehäuse umgeben. Die Bauelemente die mittels der zusätzlichen Leitung zwischen der Batterie 15 und die Starteranordnung 11, 12, 13, 14 geschaltet werden, können in das Gehäuse des Generators oder in das Gehäuse des Startermotors eingebaut werden.

Die Figur 2 zeigt das Angehverhalten eines K1-14 V/23/65A Generators mit verschiedenen Möglichkeiten der Vorerregung. Dabei ist die Generatorausgangsspannung in Volt über der Generatordrehzahl pro Minute aufgetragen.

Kurve 30 zeigt den Verlauf der Generatorspannung über der Generatordrehzahl beim Anlaufen des Generators bei einer Vorerregung ausschließlich über eine Ladekontrollampe mit 1,2 Watt Leistungsaufnahme. Die Kurven 31 und 32 zeigen denselben Sachverhalt für Ladekontrollampen mit 2,0 Watt bzw. 3,0 Watt Leistungsaufnahme.

Mit Kurve 33 ist der Verlauf der Generatorspannung über der Generatordrehzahl bei Verwendung einer 1,2 Watt Ladekontrollampe und einer Zusatzerregung bzw. Hilfserregung gemäß dem Ausführungsbeispiel nach Figur 1 schematisch dargestellt. Dabei wird deutlich, daß die Generatorausgangsspannung mit Zusatzerregung bereits bei sehr niedrigen Drehzahlen ansteigt und ihren gewünschten Maximalwert wesentlich früher erreicht als ohne Zusatzerregung. Die Angehdrehzahl des Generators wird also durch die Zusatzerregung deutlich verringert.

## Patentansprüche

1. Batterieladeeinrichtung, insbesondere für ein durch eine Brennkraftmaschine angetriebenes Kraftfahrzeug, mit einem selbsterregenden Generator (16), mit einem in Serie zur Erregerwicklung (18) des Generators (16) geschalteten Regler (19) zur Regelung des Erregerstromes, mit einer einen Startermotor (11) zum Anlassen der Brennkraftmaschine und ein Starterrelais (13) zum Einschalten des Startermotors umfassenden Starteranordnung, mit einer Batterie (15), die gemeinsam mit dem Generatorausgang einerseits an Masse und andererseits an einer Versorgungsleitung liegt, mit einem eingangsseitig an Versorgungsspannung liegenden Fahrschalter (21), bei dem in der Ausgangsstellung kein Kontakt geschlossen ist, während in der Betriebsstellung ein Betriebskontakt zum Einschalten von Verbrauchern (22) im Kraftfahrzeug und in einer Anlaßstellung sowohl ein Anlaßkontakt zum Einschalten der Starteranordnung als auch der Betriebskontakt geschlossen sind und mit einem über den Betriebskontakt verlaufenden ersten Stromzweig, der zur Erregerwicklung (18) führt, dadurch gekennzeichnet, daß mittels eines ansteuerbaren Relais (27) ein zusätzlicher Stromzweig zwischen die Batterie (15) und die Erregerwicklung (18) schaltbar ist und das Relais (27) mit einer Abfallverzögerung ausgestattet ist.

2. Batterieladeeinrichtung nach Anspruch 1, dadurch gekennzeichnet, daß mit der zusätzliche Stromzweig wenigstens eine Diode (26) enthält.

3. Batterieladeeinrichtung nach Anspruch 1, dadurch gekennzeichnet, daß der zusätzliche Stromzweig wenigstens einen ohmschen Widerstand (25) enthält.

4. Batterieladeeinrichtung nach Anspruch 1 oder 2, dadurch gekennzeichnet, daß mit der Diode (26) ein ohmscher Widerstand (25) in Serie geschaltet ist.

5. Batterieladeeinrichtung nach Anspruch 1, 2, 3 oder 4, dadurch gekennzeichnet, daß das Relais (27) vom Fahrschalter (21) angesteuerte wird.

6. Batterieladeeinrichtung nach Anspruch 1, 2, 3 oder 4, dadurch gekennzeichnet, daß das Relais (27) von der Starteranordnung (11 bis 14) angesteuert wird.

7. Batterieladeeinrichtung nach Anspruch 1, dadurch gekennzeichnet, daß die Zeitverzögerung durch Parallelschaltung eines Kondensators (29) zum Relais (27) erreicht wird, wobei eine Diode (28) mit der Kathode am Relais (27) und mit der Anode an die Verbindung zwischen Starterrelais (14) und Fahrschalter (21) gelegt ist.

8. Batterieladeeinrichtung nach einem der vorhergehenden Ansprüche, dadurch gekennzeichnet, daß wenigstens eines der Bauelemente (24 bis 29) des zusätzlichen Stromzweiges in das Gehäuse des Starters oder in das Gehäuse des Generators eingebaut sind.

## Claims

1. Battery charger, in particular for a motor vehicle driven by an internal combustion engine, having a self-exciting generator (16), a controller (19), connected in series with the excitation winding (18) of the generator (16), for controlling the exciting current, a starter arrangement comprising a starter motor (11) for starting the internal combustion engine and a starter relay (13) for switching on the starter motor, a battery (15) which is connected in common with the generator output to frame, on the one hand, and to a supply line, on the other hand, a controller (21) which is connected on the input side to a supply voltage and in which no contact is closed in the initial position while in the operating position an operating contact for switching on consumers (22) in the motor vehicle is closed and in a starting position both a starting contact for switching on the starter arrangement and the operating contact are closed, and a first branch circuit which extends via the operating contacts and leads to the excitation winding (18), characterised in that it is possible by means of a drivable relay (27) to connect an additional branch circuit between the battery (15) and the excitation winding (18), and the relay (27) is fitted with a dropout delay.

2. Battery charger according to Claim 1, characterised in that with [sic] the additional branch circuit contains at least one diode (26).

3. Battery charger according to Claim 1, characterized in that the additional branch circuit contains at least one ohmic resistor (25).

4. Battery charger according to Claim 1 or 2, characterized in that an ohmic resistor (25) is connected in series with the diode (26).

5. Battery charger according to Claim 1, 2, 3 or 4, characterized in that the relay (27) is driven by the controller (21).

6. Battery charger according to Claim 1, 2, 3 or 4, characterized in that the relay (27) is driven by the starter arrangement (11 to 14).

7. Battery charger according to Claim 1, characterised in that the time delay device is achieved by the parallel connection of a capacitor (29) to the relay (27), a diode (28) being connected by the cathode to the relay (27) and by the anode to the connection between the starter relay (14) and controller (21).

8. Battery charger according to one of the preceding claims, characterized in that at least one of the components (24 to 29) of the additional branch circuit is built into the housing of the starter or into the housing of the generator.

## Revendications

1. Chargeur de batterie notamment pour un véhicule entraîné par un moteur thermique, comportant un générateur (16) à auto-excitation avec en série sur l'enroulement d'excitation (18) du générateur (16) un régulateur (19) pour réguler le courant d'excitation, un démarreur (11) pour démarrer le moteur thermique et un relais de démarreur (13) pour brancher l'installation du démarreur avec une batterie (15) reliée en commun d'une part sur la sortie du générateur et la masse et d'autre part sur une ligne d'alimentation avec un contact de marche (21) dont l'entrée est reliée à la tension d'alimentation et qui, en position de repos, n'a pas de contact fermé alors qu'en position de fonctionnement un contact de fonctionnement pour brancher les utilisateurs (22) du véhicule et une position de démarrage, à la fois un contact de démarrage pour brancher le démarreur et un contact de fonctionnement qui sont alors fermés, et un premier chemin de courant passant par le contact de fonctionnement et conduisant à l'enroulement d'excitation (18), chargeur caractérisé en ce qu'à l'aide d'un relais commandé (27) on peut brancher une branche de courant supplémentaire entre la batterie (15) et l'enroulement d'excitation (18) et le relais (27) est équipé d'une temporisation de chute.

2. Chargeur de batterie selon la revendication 1, caractérisé en ce que la branche de courant supplémentaire comporte au moins une diode (26).

3. Chargeur de batterie selon la revendication 1, caractérisé en ce que la branche de courant supplémentaire comporte au moins une résistance ohmique (25).

4. Chargeur de batterie selon la revendication 1 ou 2, caractérisé en ce qu'une résistance ohmique (25) est branchée en série sur la diode (26).

5. Chargeur de batterie selon les revendications 1, 2, 3, ou 4, caractérisé en ce que le relais (27) est commandé par le commutateur de marche (21).

6. Chargeur de batterie selon la revendication 1, 2, 3 ou 4, caractérisé en ce que le relais (27) est commandé par le montage de démarreur (11 - 14).

7. Chargeur de batterie selon la revendication 1, caractérisé en ce que la temporisation est réalisée par le montage en parallèle d'un condensateur (29) et du relais (27), une diode (28) étant reliée par sa cathode au relais (27) et par son anode à la liaison entre le relais de démarreur (14) et le commutateur de marche (21).

8. Chargeur de batterie selon l'une des revendications précédentes, caractérisé en ce qu'au moins l'un des composants (24 - 29) de la branche de courant supplémentaire est intégré au boîtier du démarreur ou au boîtier du générateur.
